# EUROPEAN PATENT SPECIFICATION

(11) **EP 0 367 328 B1**
(45) Date of publication and mention of the grant of the patent: **09.06.1993**
(21) Application number: 89202643.6
(22) Date of filing: 19.10.1989
(51) Int. Cl.: F16F 1/54, B60K 5/12

(54) **Elastic bearing**
Elastisches Lager
Support élastique

(30) Priority: 03.11.1988 NL 8802691
(43) Date of publication of application: 09.05.1990
(73) Proprietor: Netherlands Car B.V., 5708 HT Helmond (NL)
(72) Inventor: Van Leeuwen, Robertus Gerardus Francis, NL-5627 ND Eindhoven (NL)
(74) Representative: Timmermans, Anthonius C.Th., Ir.

(56) References cited:
- EP-A- 0 268 734
- DE-U- 7 535 392
- FR-A- 815 493
- FR-A- 2 577 989
- FR-A- 2 627 545
- GB-A- 603 554
- GB-A- 1 016 392
- US-A- 2 079 798

## Description

The invention relates to an elastic bearing as defined by the features of the first part of claim 1. Such an elastic bearing is known from GB-A-1 016 392.

Elastic bearings, which damp the movements of a vehicle engine, are widely known art. These movements can be differentiated into the relatively low-frequency tilting motions of the engine, such as those which occur during acceleration or deceleration of the vehicle, and the relatively high-frequency engine vibrations. The tilting motions in the frequency range of 3 to 18 hertz have the greater influence on the ride comfort, while the engine vibrations in the 50 to 200 hertz range impinge upon the various components in and on the vehicle and also upon the interior as a resonant cavity, whence the motions become not only tangible but also, inter alia on account of the suplementary derived vibrations of the components, additionally audible. Thus there has been every reason to further refine and develop the art used in the elastic bearing and to give the bearing frequency-selective properties in order to realize optimal damping, especially in the frequency ranges of concern.

The use of fluid damped, so-called hydro-elastic bearings to this end is known art. A known hydro-elastic bearing has two chambers of cylindrical section, which are completely filled with anti-freeze fluid. The chambers are separated by a cylindrical dividing wall, at the periphery of which is situated a channel of which the length and section can be adjusted by the rotation of two wall parts, whereby the resistance encountered by the fluid during passage through the channel is adjustable. Through a holder which is comprised in a rubber body, on a longitudinal movement of the holder the fluid in the first chamber is periodically placed under pressure. Since a bellows is mounted around the second chamber in the interior of the bearing, the movement of the holder results in a displacement of fluid through the channel. At a higher frequency of the movement, the fluid displacement cannot follow the movement and the movement is additionally damped.

All the same, the frequency-dependent damping which thus takes place results in an unacceptable rise in the noise level at higher frequencies of motion, and this has led, in yet further refinement and advancement of the bearing, to a more flexible suspension of at least a part of the dividing wall, in order to restrict the noise level.

A price-to-comfort ratio of such bearing is influenced by the inclusion of built-in stops, which are so integrated in the bearing that under dynamic loading extreme displacements are limited, without the damping properties being affected all that unfavourably.

The said stops raise the cost of both the construction and of the more labour intensive production process.

The aim of the invention is to provide a simple bearing with an improved price-to-comfort ratio, which bearing, without departing from a simple construction, effectively damps movements in various directions.

To that end, the elastic bearing according to the invention is as defined by the features of claim 1.

The advantage of the elastic bearing according to the invention lies in the combination of its simplicity, its solid construction, and its offering, despite the simplicity, the possibility to damp motions in various independent and opposing directions (e.g. engine motions along all the principal axes of the vehicle).

A further advantage is that the permissible freedom of movement which the elastic bearing allows longitudinally and in directions lying in the transverse plane can be further determined by a choice of the longitudinal dimension of the flared circumferential flange.

An embodiment of the elastic bearing according to the invention has the distinguishing feature that the elastic material is provided with a buffer plate on that end face which remains outside the receptacle, which buffer plate is provided with a buffer edge which extends beyond the circumference of the elastic material and upon which is mounted a buffer made of elastic material, and that the flared circumferential flange of the receptacle has a flange which lies in the transverse plane.

This embodiment of the elastic bearing according to the invention ensures that an anomalous movement of the elastic bearing in the longitudinal direction is checked. In particular, in the case of a compressive loading of the elastic bearing and an according mutually approaching movement of the two attachment shafts, a checking of that mutually approaching movement of the attachment shafts is realized through the making of a mechanical contact between the buffer and the flange.

A following embodiment of the elastic bearing according to the invention has the distinguishing feature that the flared circumferential flange is bent along a portion of the periphery into a channel section, so that the buffer edge can be received into that section.

This embodiment of the elastic bearing according to the invention has the advantage that, in addition to movements in which the attachment shafts approach each other, movements in which the attachment shafts move away from each other can also be effectively checked after a certain threshold value has been exceeded.

In a further embodiment according to the invention, the elastic bearing is preferably distinguished in that the elastic material has a section with an elliptical and/or barrel-shaped section. A barrel-shaped section of the elastic material, together with the internal shape (circumference and depth) of the receptacle, determines the motion damping properties of the bearing on longitudinal compression. In a yet further preferred embodiment, the inner section of the receptacle of the elastic bearing is circular.

The invention will be further elucidated by reference to the drawing, in which similar components are provided with the same reference numbers. In the drawings:
Figure 1 shows an elastic bearing according to the invention, represented partly in transverse section, in a statically loaded state; and
Figure 2 shows a top view of the bearing shown in Figure 1.

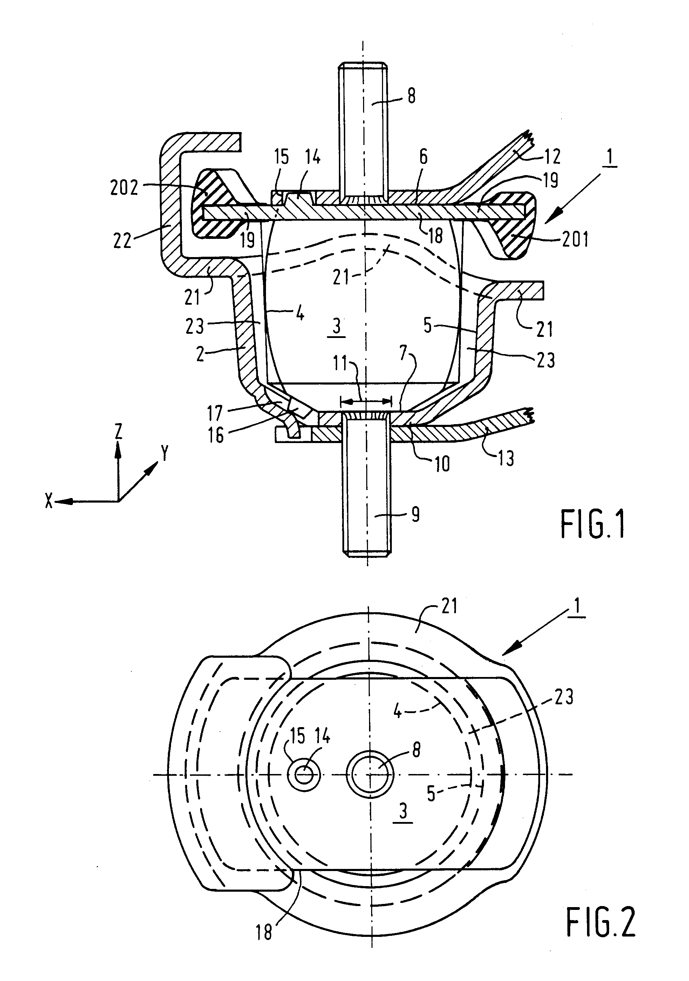

In Figure 1 there is shown an elastic bearing 1 which is constructed of a generally metal receptacle 2, which has a partially bowl-shaped section, and of an elastic material 3 which is held in the receptacle and which can, for example, be made of a plastic and/or a rubber material. From the top view shown in Figure 2 of the bearing 1 of Figure 1, it can be seen that the receptacle 2 and the elastic material 3 have a curved, rounded form. From the preferred embodiment of the bearing 1 which is illustrated, it can be seen that the outline 4 of the elastic material 3 has a somewhat elliptical profile. The inner section 5 of the receptacle 2, which is situated at some distance from the outline 4, will preferably have a circular section. The material 3 is bounded in the longitudinal direction by two end faces 6 and 7. An attachment shaft 8 passes through the end face 6 into the material 3 and an attachment shaft 9 passes through the end face 7 into the material 3. The shafts 8 and 9 are both generally provided with a screw thread. The flared or bowl-shaped receptacle 2 has a recessed side 10 in which an opening 11 is provided, through which the attachment shaft 9 is thrust. The bearing 1 is clamped between a bracket 12 which is mounted at the end face 6 and which can be, for example, an engine mounting bracket, and an auxiliary frame 13 or vehicle body part, only a portion of which is shown in Figure 1, which is mounted at the recessed side 10 of the receptacle 2. The bracket 12 and the auxiliary frame 13 are attached rigidly to the attachment shafts 8 and 9, respectively, by means of nuts, which are not shown. A protuberance 14 and a corresponding opening 15 in the bracket 12 secures and locates the material 3 with respect to the bracket 12. Optionally, the end face 7 of the material 3 can be provided in a similar fashion with a protuberance 16 with a corresponding opening 17 in the recessed side 10, which prevents displacement of and locates both the elastic material 3 and the receptacle 2 with respect to each other and the receptacle 2 with respect to the auxiliary frame 13.

For a further explanation of the working of the elastic bearing, it is necessary to draw a distinction between the following principal directions: the Z-axis direction or longitudinal axis, and the transverse plane which is perpendicular to the longitudinal direction in which the axes X and Y are situated. The working of the elastic bearing is such that, through the design of the outline 4 of the elastic material 3 in combination with the form and depth of the inner section 5 of the receptacle 2, the motion damping properties of the bearing, in particular in respect of the loading thereof along the principal axes, can be determined independently of one another. As explained in the foregoing, the outline 4 has, for example, an elliptical section, with the major axis of the ellipse lying, for example, in the X-axis direction, as shown in Figure 2. The minor axis of the ellipse then lies in the Y-axis direction. On a motion of the bracket 12 with respect to the auxiliary frame 13, for example as a consequence of engine movements and/or as a consequence of driving on an irregular road surface and/or as a consequence of the braking, acceleration, or cornering of the vehicle, the bracket 12 and the auxiliary frame 13 move, for example, in the transverse plane, it being possible thereby, through choice of the said combination of the shape of the outline 4 and the shape and depth of the inner section 5, not only to determine the damping in the X and Y-axis directions independently of each other, but also to allow the damping in the two opposite X-axis directions to differ from each other, and similarly in the two Y-axis directions. In the latter case, for example, the section of the outline 4 of the material 3 will not display point symmetry, and the section, seen in Figure 2, to the left of the Y-axis will differ from that to the right of the Y-axis, and the section above the X-axis will differ from that below the X-axis. All the same, preference will generally be given to a symmetrical, for example elliptical, section of the outline 4, as is shown in Figure 2. If considered desirable, the combination can in principle be so chosen that the outline 4 has a circular section and that the inner section 5 of the receptacle 2 is elliptical in shape.

In Figure 1 it has been made clear that the elastic material 3 has a barrel-shaped section 4 lying in the Z-axis direction. The barrel-shaped section along the Z-axis and the possibly elliptical section in the X-Y plane, together with the flared circumferential flange 21 lying in the Z-axis direction ultimately define the working space 23 between the receptacle 2 and the elastic material 3. The spatial form of the working space 23 is definitive for the displacement and damping properties of the bearing 1 in the various directions. Especially on compression of the bearing 1, the characterizing properties in the Z-axis direction are determined by the filling up of the working space 23 with the elastic material 3 and the bulging of the elastic material 3 over the flared circumferential flange 21 in a predetermined way which is also dependent on the profile of the flared circumferential flange 21.

A buffer plate 18 is mounted on the end face 6, which plate has a buffer edge 19 extending beyond the circumference of the material 3, upon which are locally mounted buffers 201 and 202, which are made of elastic material. A portion of the extremity of the receptacle 2 is provided with a generally folded flange or flared circumferential flange 21. Thus the portion of the flared circumferential flange 21 lying in the transverse plane functions as the flange with which the first buffer 201 co-operates, in the event of the attachment shafts 8 and 9 moving towards each other. In that case the bearing 1 is thus loaded compressively and the portion of the elastic material situated inside the receptacle 2 will bulge outwards against the interior surface 5 of the receptacle 2, with the exterior shape of the elastic material 3 and the interior shape of receptacle 2, including the flared circumferential flange 21, determining the motion damping properties. On a further compressive loading of the bearing 1, the first buffer 201 will also make local contact with the flared circumferential flange 21 and will resolutely damp the motion.

A portion of the flared circumferential flange 21 is bent into the form of a channel section 22. In that case a portion of the second buffer 202 remains inside the channel section 22, so that movements of the bearing in the opposite Z-axis direction will also be effectively checked the moment the second buffer 202 makes contact with the channel section 22.

The bearing is not only simple but is also universally applicable and is suited for use both as an engine mounting in a vehicle with a transversely disposed engine and for use in a vehicle with an engine disposed along the longitudinal axis of the vehicle. The fact is that, according to the orientation of the engine, the bearing can be adjusted to the specific motion damping properties in the X or in the Y-axis direction by simple rotation thereof. Moreover, it is possible to determine the point at which the motions are checked in the X-axis direction and in the Y-axis direction by choice of the ratio of the outside diameter of the elastic material 3 in relation to the inside diameter 5 of the receptacle 2.

The motion damping properties in the Z-axis direction of the bearing also function excellently in practice, since the various frequency components in the motion of the engine, as a consequence of different delay times of these frequency components, result in an averaging out of the motion ultimately experienced by a passenger in the vehicle, whence in practice the ride comfort is adequately propitious, certainly when in this case the propitious motion damping properties in the X-axis direction and the Y-axis direction are also taken into account.

For the elastic material a generally suitable rubber, plastic or rubber/plastic combination will be chosen.

## Claims

1. Elastic bearing (1), constructed from a receptacle (2) and an elastic material (3) which is received at least partly within the receptacle (2), the motion damping properties of the bearing (1) are determined by a choice of a combination of the sectional profile of the portion of the elastic material (3) held in the receptacle (2) and the profile of the inner section of the receptacle (2) which is to co-operate with that elastic material, whereby the elastic material (3) has two logitudinally bounding end faces (6, 7), a first and a second attachment shaft (8, 9) passing through the respective end face into the elastic material (3), the receptacle (2) is bowl-shaped and provided on a recessed side (10) with an opening (11) through which the first attachment shaft (9) is passed, characterized in that an edge portion of the receptacle (2) which embraces the elastic material (3) has a substantially radially flared circumferential flange (21) having a longitudinal undulating surface, through which the motion damping properties of the bearing are further determined in both the longitudinal direction and in directions perpendicular to the longitudinal direction.

2. Elastic bearing as claimed in claim 1, characterized in that the elastic material (3) is provided with a buffer plate (18) on that end face (6) which remains outside the receptacle (2), which buffer plate (18) is provided with a buffer edge (19) which extends beyond the circumference of the elastic material and upon which is mounted a buffer (201, 202) made of elastic material, and that the flared circumferential flange (21) of the receptacle (2) has a flange (22) which lies in the transverse plane and is to co-operate with the buffer (201, 202).

3. Elastic bearing as claimed in claim 2, characterized in that the flange (22) is bent along a portion of the flared circumferential flange (21) into the form of a channel section to receive a buffer edge (202) of said buffer.

4. Elastic bearing as claimed in any one of the claims 1 to 3, characterized in that the elastic material (3) has a section with an elliptical outline (4).

5. Elastic bearing as claimed in any one of the claims 1 to 3, characterized in that the elastic material (3) has a barrel-shaped section (4).

6. Elastic bearing as claimed in claim 4 or 5, characterized in that the inner section (5) of the receptacle (2) is circular.

## Patentansprüche

1. Ein elastisches Lager (1), aufgebaut aus einer Einfassung (2) und einem elastischen Material (3), das wenigstens zu einem Teil innerhalb der Einfassung (2) aufgenommen wird, wobei die bewegungsdämpfenden Eigenschaften des Lagers (1) durch eine Wahl des Querschnittprofils des Teils des elastischen Materials (3) innerhalb der Einfassung (2) und des Profils des Innenquerschnitts der Einfassung (2), da s mit dem elastischen Material Zusammenwirken muß, wobei das elastische Material (3) in der Längsrichtung zwei begrenzende Stirnflächen (6, 7) hat, ein erster und ein zweiter Befestigungsstiel (8, 9) stecken durch die jeweiligen Stirnflächen in das elastische Material (3) hinein, und die Einfassung (2) ist pfannenförmig und mit einer vertieften Seite (10) mit einer Öffnung (11) versehen, wodurch der erste Befestigungsstiel (9) hindurchgesteckt wird, dadurch gekennzeichnet, daß ein Teil des Rands der Einfassung (2), die das elastische Material umfaßt, einen nahezu radialen helmförmigen Umfangsrand (21) hat, der eine longitudinale Wellenoberfläche hat, wodurch die bewegungsdämpfenden Eigenschaften des Lagers sowohl in der Längsrichtung als auch in den senkrecht zu der Längsrichtung verlaufenden Richtungen weiter bestimmt werden.

2. Ein elastisches Lager nach Anspruch 1, dadurch gekennzeichnet, daß das elastische Material (3) mit einer Stoßplatte (18) an derjenigen Stirnfläche (6) versehen ist, die außerhalb der Einfassung (2) bleibt, welche Stoßplatte (18) mit einem außerhalb des Umfangs des elastischen Materials herausragenden Stoßrand (19) versehen ist und worauf ein aus elastischem Material hergestelltes Stoßkissen (210, 202) montiert ist, und daß der helmförmige Umfangsrand (21) der Einfassung (2) einen in der Querfläche gelegenen Rand (229 hat, der mit dem Stoßkissen (210, 202) zusammenarbeiten muß.

3. Ein elastisches Lager nach Anspruch 2, dadurch gekennzeichnet, daß der Rand (22) entlang einem Teil des helmförmigen Umfangsrands (21) in Form eines Rinnenteils gebogen ist, um einen Stoßrand des vorgenannten Stoßkissens (202) aufzunehmen.

4. Ein elastisches Lager nach einem der vorigen Ansprüche 1 bis 3, dadurch gekennzeichnet, daß das elastische Material (3) einen Teil mit elliptischem Umfang (4) hat.

5. Ein elastisches Lager nach einem der Ansprüche 1 bis 3, dadurch gekennzeichnet, daß das elastische Material (3) einen tonnenförmigen Teil (4) aufweist.

6. Ein elastisches Lager nach Anspruch 4 oder 5, dadurch gekennzeichnet, daß der Innenquerschnitt (5) der Einfassung (2) kreisförmig ist.

## Revendications

1. Un support élastique (1) composé d'un châssis (2) et d'une matière élastique (3) qui est au moins pour une partie incorporée dans le châssis (2) alors que les propriétés d'amortissement de mouvement du support élastique (1) sont déterminées par un choix d'une combinaison de la coupe de profil de la partie de la matière élastique (3) et du profil du diamètre intérieur du châssis (2) qui doit coopérer avec la matière élastique, la matière élastique (3) ayant dans le sens longitudinal deux plans de fond limitatifs (6, 7); une première et une seconde manche de fixation (8, 9) passent par les plans de fond respectifs dans la matière élastique (3), et le châssis (2) est en forme de bassin et pourvu d'un côté approfondi (10) avec une ouverture (11) par laquelle passe la première manche de fixation (9), caractérisé du fait qu'une partie du bord du châssis (2) entourant la matière élastique, a un bord périmétral (21) en forme de casque et à peu près radial qui a une surface ondulante longitudinale permettant de déterminer les propriétés d'amortissement de mouvement du support élastique aussi bien dans le sens longitudinal que dans des sens perpendiculaires au sens longitudinal.

2. Un support élastique conformément à la conclusion 1 caractérisé du fait que la matière élastique (3) est pourvue d'une chicane (18) au plan de fond (6) restant à l'extérieur du châssis (2), laquelle chicane (18) est équipée d'un bourrelet (19) faisant saillie de la circonférence de la matière élastique et auquel est monté un tampon (210, 202) en matière élastique et que le bord périmétral (21) en forme de casque du châssis (2) a un bord (22) se trouvant dans le plan transversal et qui doit coopérer avec le tampon (210, 202).

3. Un support élastique conformément à la conclusion 2 caractérisé du fait que le bord (22) est courbé, le long d'une partie du bord périmétral (21) en forme de casque, en forme d'une partie de gouttière pour recevoir un bourrelet du tampon (202) en question.

4. Un support élastique conformément à l'une des conclusions précédentes 1 jusque et y encluse 3, caractérisé du fait que la matière élastique (3) a une partie à circonférence elliptique (4).

5. Un support élastique conformément à l'une des conclusions précédentes 1 jusque et y encluse 3, caractérisé du fait que la matière élastique (3) a une partie en forme de tonneau.

6. Un support élastique conformément à la conclusion 4 ou 5, caractérisé du fait que le diamètre intérieur (5) du châssis (2) est circulaire.
